# EUROPEAN PATENT SPECIFICATION

(11) **EP 2 805 788 B1**
(45) Date of publication and mention of the grant of the patent: **07.03.2018**
(21) Application number: 13168520.8
(22) Date of filing: 21.05.2013
(51) Int. Cl.: B23D 15/00, B23D 27/00, B23D 31/00

(54) **Cutting apparatus**
Schneidvorrichtung
Appareil de découpage

(43) Date of publication of application: 26.11.2014
(73) Proprietor: Nibbler Sales AB, 335 21 Gnosjö (SE)
(72) Inventor: Petersson, Tomas, 335 31 Gnosjö (SE); Johansen, Tommy, 331 93 Värnamo (SE)
(74) Representative: Bergenstråhle Group AB

(56) References cited:
- EP-A1- 1 074 324
- CH-A5- 687 510
- JP-A- 2000 288 864
- US-A- 4 703 678
- US-A- 4 869 141

## Description

### TECHNICAL FIELD

The present invention concerns a cutting apparatus, comprising cutting blades, as defined in the preamble of claim 1. An example of such a cutting apparatus is disclosed in CH 687 510 A5.

### PRIOR ART

The problem of cutting scrap material pieces into smaller pieces is well known. One reason for doing this is that smaller pieces are often easier to collect, handle, and transport. The outer dimensions of a metal sheet, from which work pieces have been cut, may be large, but the amount of material left is usually low, making the sheet unstable, difficult to handle and unnecessarily bulky.

Another reason for cutting the scrap into smaller pieces is that the prices paid by scrap dealers for recycling of the scrap are higher if the scrap pieces are in such dimensions that they are easy to handle. It is desirable that the outer dimensions of the pieces are no more than 300 mm by 300 mm.

As cutting large quantities of scrap into smaller pieces manually would be strenuous and time-consuming as well as space-demanding, an arrangement for automation of this is desirable. Several attempts of such an arrangement may be seen in the prior art. GB1131823A discloses a device for cutting corrugated sheets with a rotating disc that may be lowered and raised into and out of a cutting position. As the disc only cuts in one direction, the result will be strips of material, the length of which may be up to the width of the sheets fed into the device. If the length of the strips is larger than desired, the strips will have to be fed once more into the device, in the transverse direction, for cutting into smaller pieces. This is time consuming, and the narrow strips run the risk of jamming in the device, which is primarily designed for wide sheets.

GB 2143441A discloses a hoop material cutter, which is designed to handle narrow strips of material well. Due to the original dimensions of the hoop material, i. e. a narrow strip, it will need to be cut only in one direction in order to achieve the desired maximum dimensions in all directions. The hoop material cutter includes one fixed blade and one movable blade, between which the hoop material is fed for cutting. The length of the blade is decisive for the width of the material that may be fed through the cutter.

In the art it is also known scrap cutting devices with a cutting blade of a complex shape. The main disadvantage of this type of cutter is that the cost for the blade and for the sharpening thereof is very high.

### PROBLEM

With regard to the prior art, a cutting apparatus is desired for efficiently cutting pieces of material, with large dimensions, into smaller pieces, regardless of the original outer dimensions.

### SOLUTION

The object of the present invention will be attained, if the initially mentioned cutting apparatus is provided with the features defined in claim 1. Further advantages will be attained if the scrap cutting apparatus is given one or more of the features of claims 2-7.

The object of the present invention is also attained by the use of such a cutting apparatus as defined in claim 8.

### BRIEF DESCRIPTION OF THE DRAWINGS

The present invention will now be described with reference to the attached drawings. In the drawings:
- Fig 1: is a perspective view of an apparatus according to the invention;
- Fig 2: is a perspective view of a cutting unit included in the apparatus according to the invention;
- Fig 3: is a perspective view from an opposite side of the cutting unit of fig 2; and
- Fig 4: is a detail view in perspective of cutting blades included in the cutting unit of figures 2 and 3.

### DESCRIPTION OF A PREFERRED EMBODIMENT

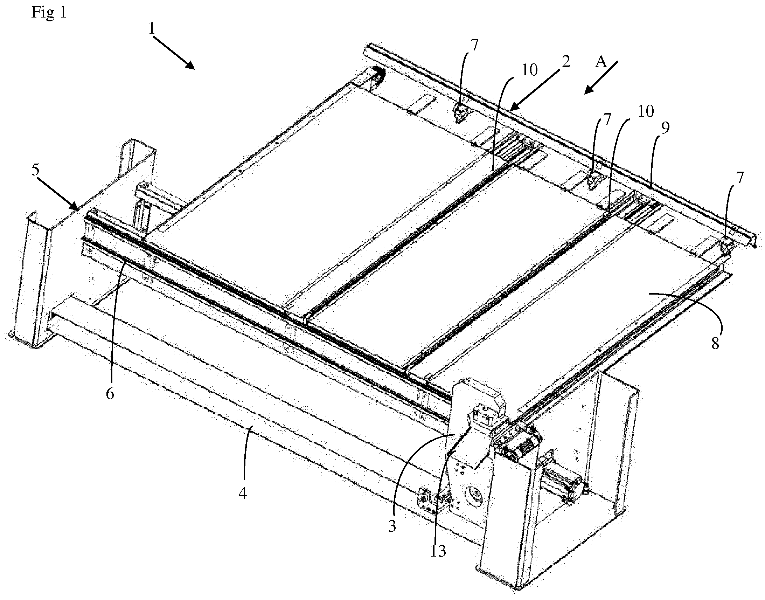

The present invention will now be described with the use of such words as upper, lower, sideways, etc. These words refer to the preferred embodiment in its normal position of use, i. e. as it is shown in fig 1. The description of the preferred embodiment does not, however, exclude other embodiments where the components and features are arranged differently, but according to the same inventive idea.

Figure 1 shows a cutting apparatus 1 according to the invention in perspective. This particular embodiment of the cutting apparatus 1 is a scrap cutting apparatus. There are other embodiments and uses of the cutting apparatus 1, as will be discussed below.

The scrap cutting apparatus 1 includes a feeding device 2, which transports the scrap towards a cutting zone at the forward end of the scrap cutting apparatus 1. A cutting unit 3 is movable back and forth along the forward end of the scrap cutting apparatus 1, for cutting the scrap into smaller pieces.

The scrap is typically a large metal sheet, from which a number of work pieces have been cut with as little waste as possible. It will thus often resemble a lattice, where the amount of metal is limited in relation to its outer dimensions, and it is highly desirable to cut it into smaller pieces.

The feeding device 2 is, in the preferred embodiment, a transversal, mobile girder 9, provided with retainers 7 for feeding the scrap towards the cutting unit 3. The retainers 7 will clamp the scrap material, inserted into the feeding device 2. By a motion of the transversal girder 9, the scrap material will be fed, on a bed 8 of the scrap cutting apparatus 1, towards the cutting unit 3 in the direction of the arrow A. Drive belts 10 are arranged for moving the transversal, mobile girder 9 at intervals. Each time the mobile girder 9 moves forward, the scrap material will be fed a distance forward. In the preferred embodiment, this distance will be corresponding to the desired dimension of the cut smaller pieces and to the capacity of the cutting unit 3. The distance is variable and selectable in the preferred embodiment in a range from 10mm up to the length of the cutting blades in the cutting unit 3.

The bed 8 and the cutting unit 3 are supported by a frame 5, which includes a transversal beam 6 at the forward end of the scrap cutting apparatus 1.

A sensor on the cutting unit 3, or on the bed 8, is provided to detect whether scrap material has reached the forward end of the scrap cutting apparatus 1, in which case the cutting unit 3 is activated. The cutting unit 3 is movable sideways along the forward end of the scrap cutting apparatus 1 by the action of an actuation means in the form of a drive belt 4. The drive belt 4 is arranged to move the cutting unit 3 sideways in steps corresponding to the desired outer dimension of the cut pieces in the transversal direction and to the capacity of the cutting unit 3. The length of the steps is selectable in a range from 1 mm up to the length of the blades of the cutting unit 3. A suitable length is decided with a view to the thickness of the material which is to be cut. The higher the thickness of the material, the less should be the length of the step before the cut is made.

When the cutting unit 3 has been moved one step sideways, it is arranged, mechanically or electrically, to perform one cutting operation, provided that there is material to cut in the cutting unit 3. The result is that a smaller piece will be separated from the larger piece of scrap material on the bed 8. A chute 13 is arranged for the cut-off pieces to slide on, into a collection receptacle (not shown), which is placed in front of the cutting apparatus. When the cutting unit 3 has moved all the way along the edge of the scrap material on the bed 8, from one side of the scrap cutting apparatus 1 to the other side, cutting off pieces of material, it will revert to its original position by the action of the drive belt 4.

All the time when the sheet of material is cut, it remains in its position on the bed 8, only being fed forward as the smaller pieces are cut off its forward end. This means that the need for space around the cutting apparatus is limited.

The cutting unit 3 is also provided with a detector to ensure that there is material present in the cutting unit 3 before a cutting operation is performed. In the preferred embodiment, when the cutting apparatus 1 is used for cutting scrap metal, large sections are often missing from the material, and there is no use in performing a cutting operation if no material is present in the cutting unit 3. The process of cutting up a sheet of material, with large areas of material missing, will be performed quicker if no unnecessary cutting operations are made.

In the preferred embodiment, the detector is a metal roll arranged with its axis transversal to the direction of movement of the cutting unit. Since the scrap material is assumed to be made of a metal in the preferred embodiment of the invention, the metal roll will be grounded as soon as it comes into contact with a piece of the metal. When the roll is grounded, a relay will emit a signal to the cutting unit 3, and as soon as the cutting unit 3 has moved one whole step as described earlier above, a cutting operation will be performed, and the material inside the cutting unit 3 will be cut from the sheet of material.

In order to speed up the cutting process when large numbers of identical sheets of scrap material are cut, the cutting apparatus 1 may be programmed. This may be useful in processing scrap from manufacture in large series. The first time a sheet in the series is processed in the cutting apparatus 1, the apparatus 1 is placed in a "teach mode", where movements of the cutting unit 3 and of the feeding device 2 are recorded in a memory, until the whole sheet has been cut into smaller pieces. When the next sheet in the series is fed into the cutting apparatus 1, the recorded sequence of movements and cutting operations is repeated, but the parts of the sequence where no cutting operations are made, i. e. where large sections of material are missing, are performed at a notably higher speed. The cutting unit 3 does not have to move in steps in these sections. Hence, the time needed for cutting the second and following sheets is reduced, and the process becomes more time and cost efficient.

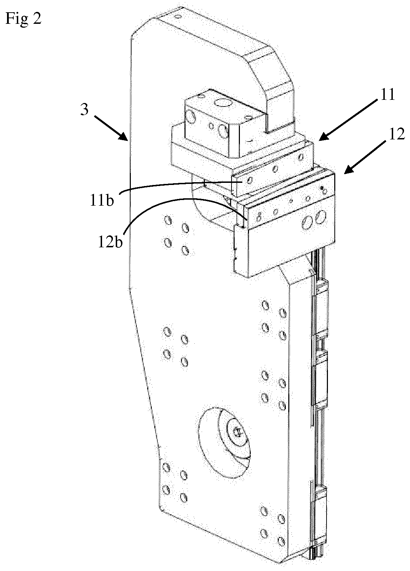

In figure 2 the cutting unit 3 is shown separately. The cutting unit 3 is provided with two separate sets 11, 12 of blades for cutting the scrap. The first set 12, comprising two blades 12a, 12b, arranged at approximately right angles to one another, are fixed relative to the cutting apparatus 1. In the preferred embodiment of the invention, the fixed set 12 of blades are arranged below the second set 11 of blades.

The second set 11 of blades is movable so that a cutting operation is performable in cooperation with the first set 12 of blades. The blades 11a, 11b of the second set 11 are arranged at approximately the same mutual angle as the blades 12a, 12b of the first set. The second set 11 is arranged so that the blades 11a, 11b overlap the blades 12a, 12b of the first set during the cutting operation of the cutting unit 3.

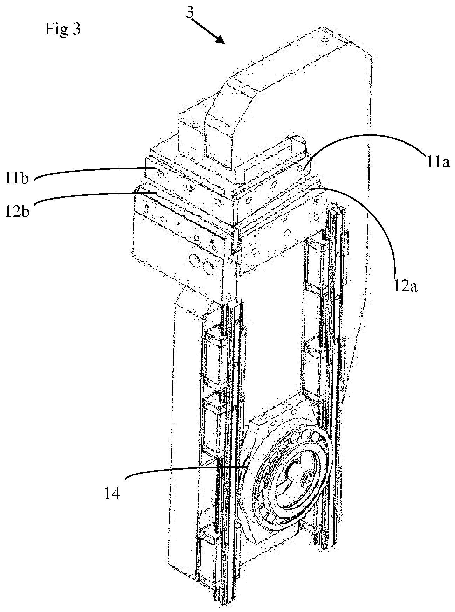

Fig 3 shows the cutting unit 3 from a different angle than in fig 2. From this angle all the blades 11a, 11b, 12a, 12b are clearly visible. Also, the actuation means 14 for lifting and lowering the second set 11 of blades and performing the cutting operation are visible. After the second set 11 of blades have been lowered sufficiently to perform the cutting operation, the actuation means 14 will lift them again in a controlled manner to their original position, so that the cutting unit 3 will be ready for a further movement step along the forward end of the cutting apparatus 1.

The cutting edges of the blades 11a, 12a and 11b, 12b, respectively, which cooperate during the cutting operation, are arranged at a slight angle, as seen in fig 2 and fig 3. Hence a linear motion downwards of the second set 11 of blades will result in a cutting operation. The cutting edges of the blades 11a, 12a and 11b, 12b, respectively, meet at a single point at each instant, thereby cutting through the scrap material, in a scissor-like manner, when the second set of blades is moved towards the first, fixed set of blades in such a cutting motion.

From the aforementioned facts and fig 2 and fig 3 it is obvious that the cutting unit 3 is able to make cuts with a length corresponding to the length of the blades 11a, 11b, 12a, 12b. Hence, when the cutting unit 3 is moved sideways along the forward end of the scrap cutting apparatus, and along the edge of the scrap material, the movement is arranged, mechanically, electrically, or with the aid of a computer, to be performed stepwise with steps no longer than the maximum length of cut, i. e. no longer than the length of the blades 11a, 12 a, which are approximately parallel with the edge of the scrap material, provided that material to be cut is present in the cutting unit 3. Otherwise the cutting unit may move longer distances, as described above. However, as the purpose in the preferred embodiment of the apparatus is to comminute large pieces of scrap material, there are no demands on the precision in this application, and the length of the steps need not be precise, as long as they are less than or equal to the length of the blades 11a, 11b, 12a, 12b.

By the same token, the feeding of the sheet of scrap material towards the cutting unit 3 by the feeding device 2 should be arranged not to exceed the length of the blades 11b, 12b, which are arranged approximately parallel with the feeding direction A.

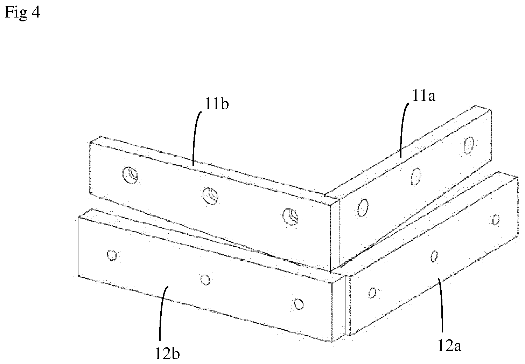

Fig 4 shows the two sets 11, 12 of blades separately. In this figure it is clear that the first, lower set 12 of blades is arranged in close vicinity of the second, upper set 11, so that the blades of the two sets 11, 12 will be able to pass close by one another, when the movable set 11 is moved by the actuation means 14 to perform the cutting.

Since the blades 11a, 11b and 12a, 12b, respectively, in each set 11, 12 of blades are placed at an angle, cutting will be performed in two directions at the same time. The directions of cutting are transversal to one another, and in the preferred embodiment of the invention they will be approximately perpendicular.

Also, the mutual angles of the cutting edges of the upper and the lower sets 11, 12 are clearly visible in figure 4. Hence the cutting force will at each single moment be concentrated in one point in each direction of cutting, thereby ensuring an optimal performance of the cutting unit 3.

Finally, fig 4 shows clearly that there are two separate blades 11a, 11b, 12a, 12b in each set of blades. The blades 11a, 11b, 12a, 12b will be fairly easy to manufacture and sharpen, and in the preferred embodiment standard blades may be used, thereby reducing the cost for these parts of the scrap cutting apparatus 1.

### ALTERNATIVE EMBODIMENTS

The cutting apparatus 1 which has been described may be varied in different aspects and adapted to different circumstances. Various features may be changed independently of one another, to form a large number of embodiments, as long as the basic concept of the invention remains as defined in claim 1. For instance, the preferred embodiment has been envisaged to handle scrap metal, such as metal sheets, but other materials, such as plastics or wood, may be handled, with minor variations in the dimensions of the apparatus and of the quality of the cutting blades. The material detector would have to be adapted to the material, in a way that is obvious to the skilled person, so that other materials, which may be non-conducting, could be detected and hereby handled by the apparatus. Such detector means may be optical or mechanical sensors arranged on the cutting unit 3, on the bed 8, or both. Also, the cutting apparatus may be used for other purposes than the cutting up of scrap material, especially since it is programmable. For instance it may be programmed to make one or more cuts in corners or in the front edge of the sheet of material that is handled by the apparatus 1. The purpose of this would be to manufacture a product or a part thereof, instead of comminuting sheets of scrap material. In this use of the apparatus, increased care would be taken to meet the precision requirements for the finished product.

The actuation means for the movement of the different movable parts in the apparatus 1 may also be varied in ways that are obvious to the skilled person. For example, the drive belt 4 for moving the cutting unit 3 may be replaced with e. g. a linear motor, a hydraulic motor, an electric motor, a hydraulic piston, a lead screw, a rack, or a gear belt.

In the described embodiment, the cutting unit 3 is inactive when it returns to its original position, after having made cuts along the forward edge of the sheet of material. In certain embodiments the blades 11a, 11b, 12a, 12b are arranged to be rotatable, i. e. turnable, around an approximately vertical axis, so that the sheet of material may be fed forward and be cut when the cutting unit 3 moves in the opposite direction. This arrangement increases the total speed of the cutting operation. Also, when the cutting apparatus 1 is used for production, certain cuts are best performed when the cutting unit 3 moves in the opposite direction.

In further embodiments, each set 11, 12 of blades comprises three blades. These embodiments allow three-sided cuts to be made in a sheet of material intended for production.

Also, if the cutting apparatus is used for scrap cutting, the embodiments with three blades in each set 11, 12 will allow for stepwise cutting in both directions of movement of the cutting unit 3. In such a use, only two of the blades in each set will cut through the material at each cutting operation, but the presence of the third blade, which is arranged at the back of the set, as seen in the direction of movement, will allow for the increased flexibility of use. When the direction of movement of the cutting unit 3 is changed, the blade that was previously at the back will now be at the front, as seen in the new direction of movement. Also the total speed of cutting a material sheet will be increased.

In the preferred embodiment, the blades of each set are arranged at approximately right angles with one another. In that case the actual lengths of the blades set the upper limits of the length of the movement of both the cutting unit 3 and of the feeding of the sheet of scrap material on the table. It would be possible to arrange them at different angles, provided that the lengths of the steps of movement of the cutting unit 3 and of the feeding of the transversal mobile girder 9 are adapted thereto. The maximum length possible for the steps of movement of the cutting unit 3 is decided by the projection of the blades 11a, 11b, 12a, 12b on the forward edge of the scrap material. Likewise the maximum feeding distance that is possible is decided by the projection of the blades 11a, 11b, 12a, 12b on the side edge of the scrap material.

## Claims

1. Cutting apparatus, comprising cutting blades (11a, 11b, 12a, 12b), whereof at least one is movable, and a feeding device (2) for feeding a sheet of material towards the cutting blades (11a, 11b, 12a, 12b), wherein the cutting blades (11a, 11b, 12a, 12b) are arranged on a cutting unit (3), **characterized in that** the cutting unit (3) includes a first set (12) of cutting blades that are fixed in relation to the movable cutting unit (3), and includes a second set (11) of cutting blades that are movable in relation to the movable cutting unit (3), and the first set (12) of cutting blades cooperates with the second set (11), when the second, movable, set (11) performs a cutting motion, wherein the cutting blades (11a, 11b, 12a, 12b) of each set (11,12) are arranged at an angle in relation to one another, and the cutting unit is movable back and forth along one edge of the sheet of material.

2. Cutting apparatus according to claim 1, **characterized in that** the movement of the cutting unit (3) takes place in steps, and the cutting unit is arranged to make a cut after it has moved one step.

3. Cutting apparatus according to claim 2, **characterized in that** the length of one step of movement of the cutting unit (3) is less than or equal to the length of the cutting blade (11a, 11b, 12a, 12b), as projected on the edge of the material.

4. Cutting apparatus according to any of claims 1 to 3, **characterized in that** the cutting unit (3) is rotatable around an approximately vertical axis, for cutting in either direction of movement of the cutting unit (3).

5. Cutting apparatus according to any of claims 1 to 4, **characterized in that** each set (11, 12) of blades in the cutting unit (3) includes three blades, for enabling cutting in either direction of movement of the cutting unit (3).

6. Cutting apparatus according to any of claims 1 to 5 **characterized in that** the cutting unit (3) is movable by an actuation means (4), such as a rack, a linear motor, a hydraulic motor, an electric motor, a hydraulic piston, a lead screw or a gear belt.

7. Cutting apparatus according to any of claims 1 to 6, **characterized in that** the cutting blades (11a, 11b, 12a, 12b) in each set (11, 12) are arranged at right angles with one another.

8. Use of a cutting apparatus according to any of claims 1 to 7 for cutting scrap.

## Patentansprüche

1. Schneidvorrichtung, umfassend Schneidklingen (11a, 11b, 12a, 12b), wovon zumindest eine beweglich ist, und eine Einspeisevorrichtung (2) zum Einspeisen eines Materialbogens hin zu den Schneidklingen (11a, 11b, 12a, 12b), wobei die Schneidklingen (11a, 11b, 12a, 12b) auf einer Schneideinheit (3) angeordnet sind, **dadurch gekennzeichnet, dass** die Schneideinheit (3) einen ersten Satz (12) von Schneidklingen enthält, der in Bezug auf die bewegliche Schneideinheit (3) fixiert ist, und einen zweiten Satz (11) von Schneidklingen enthält, der in Bezug auf die bewegliche Schneideinheit (3) beweglich ist, und der erste Satz (12) von Schneidklingen mit dem zweiten Satz (11) zusammenwirkt, wenn der zweite, bewegliche Satz (11) eine Schneidbewegung ausführt, wobei die Schneidklingen (11a, 11b, 12a, 12b) jedes Satzes (11, 12) in einem Winkel in Bezug zueinander angeordnet sind und die Schneideinheit entlang einer Kante des Materialbogens vor und zurück beweglich ist.

2. Schneidvorrichtung nach Anspruch 1, **dadurch gekennzeichnet, dass** die Bewegung der Schneideinheit (3) in Schritten stattfindet und die Schneidvorrichtung angeordnet ist, einen Schnitt zu machen, nachdem sie sich einen Schritt bewegt hat.

3. Schneidvorrichtung nach Anspruch 2, **dadurch gekennzeichnet, dass** die Länge eines Bewegungsschritts der Schneideinheit (3) kleiner oder gleich der Länge der Schneidklinge (11a, 11b, 12a, 12b), wie sie von der Kante des Materials hervorragt, ist.

4. Schneidvorrichtung nach einem der Ansprüche 1 bis 3, **dadurch gekennzeichnet, dass** die Schneideinheit (3) zum Schneiden in jeder Bewegungsrichtung der Schneideinheit (3) um eine annähernd vertikale Achse drehbar ist.

5. Schneidvorrichtung nach einem der Ansprüche 1 bis 4, **dadurch gekennzeichnet, dass** jeder Satz (11, 12) von Klingen in der Schneideinheit (3) drei Klingen enthält, um ein Schneiden in jeder Bewegungsrichtung der Schneideinheit (3) zu ermöglichen.

6. Schneidvorrichtung nach einem der Ansprüche 1 bis 5, **dadurch gekennzeichnet, dass** die Schneideinheit (3) durch ein Betätigungsmittel (4), beispielsweise ein Gestell, einen linearen Motor, einen Hydraulikmotor, einen Elektromotor, einen Hydraulikkolben, eine Leitspindel oder einen Zahnriemen, beweglich ist.

7. Schneidvorrichtung nach einem der Ansprüche 1 bis 6, **dadurch gekennzeichnet, dass** die Schneidklingen (11a, 11b, 12a, 12b) in jedem Satz (11, 12) in rechten Winkeln zueinander angeordnet sind.

8. Verwendung einer Schneidvorrichtung nach einem der Ansprüche 1 bis 7 zum Schneiden von Schrott.

## Revendications

1. Appareil de coupe, comprenant des lames de coupe (11a, 11b, 12a, 12b), dont au moins une est mobile, et un dispositif d'alimentation (2) pour réaliser l'alimentation en une feuille de matériau vers les lames de coupe (11a, 11b, 12a, 12b), dans lequel les lames de coupe (11a, 11b, 12a, 12b) sont agencées sur une unité de coupe (3), **caractérisé en ce que** l'unité de coupe (3) inclut un premier ensemble (12) de lames de coupe qui sont fixes par rapport à l'unité de coupe mobile (3), et inclut un second ensemble (11) de lames de coupe qui sont mobiles par rapport à l'unité de coupe mobile (3), et le premier ensemble (12) de lames de coupe coopère avec le second ensemble (11), lorsque le second ensemble mobile (11) réalise un mouvement de coupe, dans lequel
les lames de coupe (11a, 11b, 12a, 12b) de chaque ensemble (11, 12) sont agencées à un angle les unes par rapport aux autres, et l'unité de coupe est mobile en va-et-vient le long d'un bord de la feuille de matériau.

2. Appareil de coupe selon la revendication 1, **caractérisé en ce que** le mouvement de l'unité de coupe (3) se fait par étapes, et l'unité de coupe est agencée pour réaliser une coupe après qu'elle s'est déplacée d'une étape.

3. Appareil de coupe selon la revendication 2, **caractérisé en ce que** la longueur d'une étape de mouvement de l'unité de coupe (3) est inférieure ou égale à la longueur de la lame de coupe (11a, 11b, 12a, 12b), telle qu'en saillie sur le bord du matériau.

4. Appareil de coupe selon l'une quelconque des revendications 1 à 3, **caractérisé en ce que** l'unité de coupe (3) est rotative autour d'un axe approximativement vertical, pour couper dans l'une ou l'autre direction de mouvement de l'unité de coupe (3).

5. Appareil de coupe selon l'une quelconque des revendications 1 à 4, **caractérisé en ce que** chaque ensemble (11, 12) de lames dans l'unité de coupe (3) inclut trois lames, pour permettre la coupe dans l'une ou l'autre direction de mouvement de l'unité de coupe (3).

6. Appareil de coupe selon l'une quelconque des revendications 1 à 5, **caractérisé en ce que** l'unité de coupe (3) peut être déplacé par un moyen d'actionnement (4), tel qu'une crémaillère, un moteur linéaire, un moteur hydraulique, un moteur électrique, un piston hydraulique, une vis mère ou une courroie d'engrenage.

7. Appareil de coupe selon l'une quelconque des revendications 1 à 6, **caractérisé en ce que** les lames de coupe (11a, 11b, 12a, 12b) dans chaque ensemble (11, 12) sont agencées à angle droit les unes par rapport aux autres.

8. Utilisation d'un appareil de coupe selon l'une quelconque des revendications 1 à 7 pour couper un rebut
